# EUROPEAN PATENT APPLICATION

(11) **EP 4 289 697 A1**
(43) Date of publication of application: **13.12.2023**
(21) Application number: 21924800.2
(22) Date of filing: 30.11.2021
(51) Int. Cl.: B60W 40/13, B60W 60/00

(54) **DEVICE AND METHOD FOR CONTROLLING VEHICLE**

(30) Priority: 03.02.2021 JP 2021016128
(71) Applicant: BRIDGESTONE CORPORATION, Chuo-ku Tokyo 104-8340 (JP)
(72) Inventor: ICHIKAWA Hiromitsu, Tokyo 104-8340 (JP)
(74) Representative: Marks & Clerk LLP
(86) International application number: PCT/JP2021/043968
(87) International publication number: WO 2022/168415

(57) **Abstract**

A control device for a vehicle comprises: a communication section configured to receive first information from a sensor installed at a tire, and receive second information from a sensor installed at a vehicle body; and a controller configured to estimate a wheel load from the first information, estimate a vehicle weight from the second information, and control the vehicle based on one of the wheel load and the vehicle weight.

## Description

### TECHNICAL FIELD

The present disclosure relates to a control device and control method for a vehicle.

### BACKGROUND

Technology of controlling vehicles using information from sensors installed at tires is conventionally known. For example, JP 2010-76739 A (PTL 1) discloses a device that detects a tire lateral force generated in a tire and controls the vehicle attitude using the tire lateral force.

### CITATION LIST

### Patent Literature

PTL 1: JP 2010-76739 A

### SUMMARY

### (Technical Problem)

In recent years, further improvement in the usefulness of the technology of controlling vehicles using information from sensors installed at tires is desired. For example, there is a demand to enable control of a vehicle to be continued even in the case where information from sensors installed at its tires cannot be used.

It could therefore be helpful to provide a control device and control method for a vehicle that can improve the usefulness of the technology of controlling vehicles using information from sensors installed at tires.

A control device according to the present disclosure is a control device for a vehicle, comprising: a communication section configured to receive first information from a sensor installed at a tire, and receive second information from a sensor installed at a vehicle body; and a controller configured to estimate a wheel load from the first information, estimate a vehicle weight from the second information, and control the vehicle based on one of the wheel load and the vehicle weight.

A control method according to the present disclosure is a control method for a vehicle, comprising: receiving first information from a sensor installed at a tire; receiving second information from a sensor installed at a vehicle body; estimating a wheel load from the first information; estimating a vehicle weight from the second information; and controlling the vehicle based on one of the wheel load and the vehicle weight.

### (Advantageous Effect)

It is thus possible to provide a control device and control method for a vehicle that can improve the usefulness of the technology of controlling vehicles using information from sensors installed at tires.

### BRIEF DESCRIPTION OF THE DRAWINGS

In the accompanying drawings:
FIG. 1 is a schematic diagram illustrating a vehicle control system according to an embodiment of the present disclosure;
FIG. 2 is a schematic diagram illustrating a vehicle in FIG. 1 from below;
FIG. 3 is a functional block diagram schematically illustrating the structure of a first acquisition device in FIG. 1;
FIG. 4 is a flowchart illustrating the operation of the first acquisition device;
FIG. 5 is a functional block diagram schematically illustrating the structure of a second acquisition device in FIG. 1;
FIG. 6 is a flowchart illustrating the operation of the second acquisition device;
FIG. 7 is a functional block diagram schematically illustrating the structure of a control device in FIG. 1; and
FIG. 8 is a flowchart illustrating the operation of the control device.

### DETAILED DESCRIPTION

An embodiment of the present disclosure will be described below with reference to the drawings. In the drawings, the same or corresponding parts are given the same reference signs. In the following description of this embodiment, the description of the same or corresponding parts is omitted or simplified as appropriate.

### (Structure of vehicle control system)

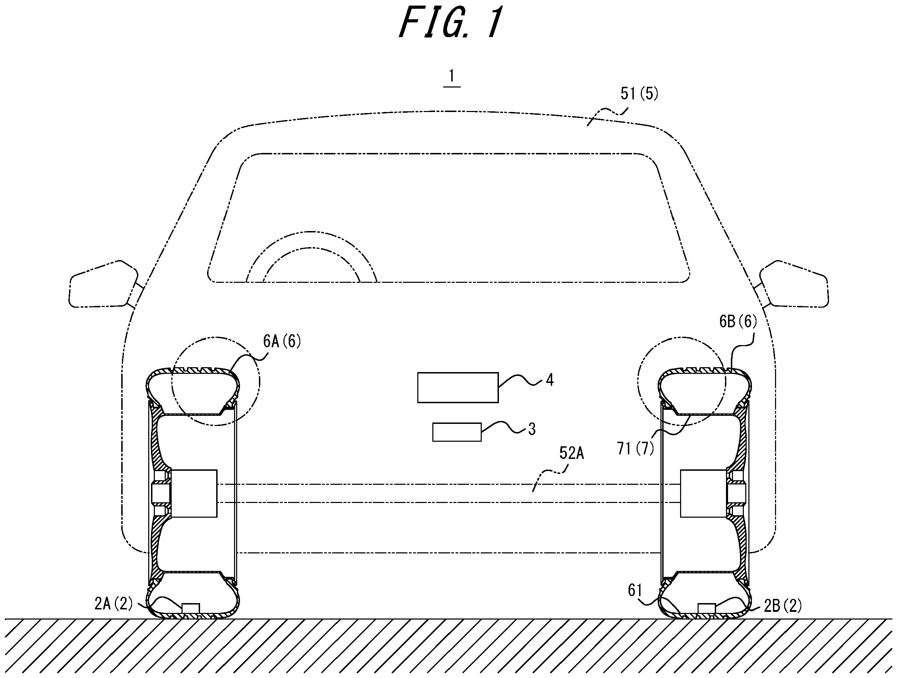

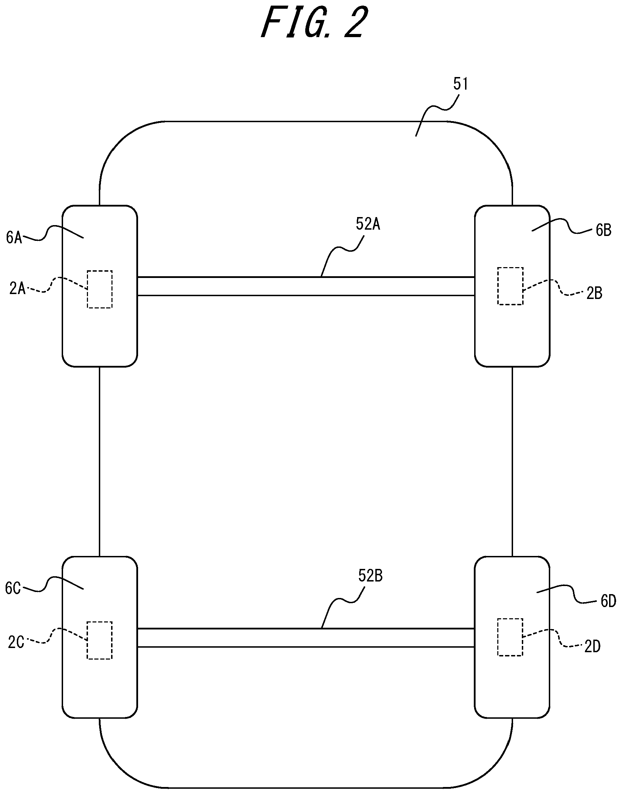

An outline of a vehicle control system 1 according to an embodiment of the present disclosure will be described below with reference to FIGS. 1 and 2. FIG. 1 is a schematic diagram illustrating the vehicle control system 1 according to this embodiment. As illustrated in FIG. 1, the vehicle control system 1 includes a first acquisition device 2, a second acquisition device 3, and a control device 4.

The vehicle control system 1 is used to control a vehicle 5. In this embodiment, the control of the vehicle 5 is intended for full or partial automated driving of the vehicle 5. For example, the control of the vehicle 5 includes control for driving the vehicle 5, such as acceleration, deceleration, or steering of the vehicle 5. The control of the vehicle 5 may include control for assisting in the driving of the vehicle 5, such as control of headlights, fog lamps, turn signals, or wipers.

The vehicle 5 is, for example, an automobile such as a passenger vehicle, a truck, a bus, or a two-wheeled vehicle. The vehicle 5 is not limited to automobiles, and may be any vehicle 5 having tires 6. The vehicle 5 has any level of automated driving. The level of automation is, for example, one of level 1 to level 5 defined by the Society of Automotive Engineers (SAE). The vehicle 5 may be fully driven by the driver (corresponding to level 0 in SAE).

As illustrated in FIG. 2, the vehicle 5 includes four tires 6A, 6B, 6C, and 6D. FIG. 2 is a schematic diagram illustrating the vehicle 5 in FIG. 1 from below. In the vehicle 5, the tires 6A and 6B as front tires are attached to an axle 52A, and the tires 6C and 6D as rear tires are attached to an axle 52B. In the following description, the tires 6A to 6D are simply referred to as tires 6 collectively when they are not particularly distinguished, and the axles 52A and 52B are simply referred to as axles 52 collectively when they are not particularly distinguished.

Referring back to FIG. 1, each tire 6 is, for example, a pneumatic tire. In this case, the tire 6 is mounted on a rim 71 of a wheel 7 and filled with air to a prescribed internal pressure. The tire 6 is not limited to pneumatic tires, and may be filled with any fluid, including gas such as nitrogen or liquid or gel-like substance, to a prescribed internal pressure. In this specification, in the state in which the tire 6 is mounted on the rim 71 of the wheel 7, it is assumed that the tire 6 also includes the rim 71 of the wheel 7.

The first acquisition device 2 acquires information about the tire 6. The first acquisition device 2 is installed at the tire 6. In this embodiment, the first acquisition device 2 is fixed to the inner peripheral surface of a tread portion 61 of the tire 6 so as to face the internal space of the tire 6. The installation position of the first acquisition device 2 is not limited to the inner peripheral surface of the tread portion 61, and may be any position where information about the tire 6 can be acquired. For example, the first acquisition device 2 may be wholly or partially embedded in the rubber that forms the tread portion 61 of the tire 6. Alternatively, the first acquisition device 2 may be installed at the rim 71 of the wheel 7 on which the tire 6 is mounted.

In this embodiment, the first acquisition device 2 is installed at each of the plurality of tires 6 of the vehicle 5. As illustrated in FIG. 2, first acquisition devices 2A, 2B, 2C, and 2D are installed at the tires 6A, 6B, 6C, and 6D respectively. In the following description, the first acquisition devices 2A to 2D are simply referred to as first acquisition devices 2 collectively when they are not particularly distinguished.

Referring back to FIG. 1, the second acquisition device 3 acquires information about the vehicle 5. The second acquisition device 3 is installed at the vehicle body 51 of the vehicle 5. The vehicle body 51 of the vehicle 5 includes any parts of the vehicle 5 other than the tires 6 and the wheels 7. In this embodiment, the second acquisition device 3 is installed near the control device 4 of the vehicle 5. The installation position of the second acquisition device 3 is not limited to the vicinity of the control device 4 of the vehicle 5, and may be any position where information about the vehicle 5 can be acquired.

The control device 4 controls the vehicle 5. The control device 4 is installed at the vehicle body 51 of the vehicle 5. The control device 4 is, for example, an electronic control unit (ECU) of the vehicle 5. The control device 4 is not limited to an ECU, and may be any computer installed in the vehicle 5, such as a tire pressure monitoring system (TPMS). The control of the vehicle 5 by the control device 4 may be direct control of the vehicle 5 or indirect control of the vehicle 5. For example, in the case where the control device 4 is an ECU, the control device 4 may directly control the vehicle 5 by transmitting control signals to the accelerator, brake, steering, etc. of the vehicle 5. In the case where the control device 4 is a TPMS, the control device 4 may indirectly control the vehicle 5 by transmitting control signals for controlling the accelerator, brake, steering, etc. of the vehicle 5 to the ECU or the like of the vehicle 5.

The positions and numbers of first acquisition devices 2, second acquisition devices 3, control devices 4, axles 52, tires 6, and wheels 7 in the vehicle 5 illustrated in FIGS. 1 and 2 are an example, and may be determined freely depending on the purpose of use, etc. For example, the first acquisition device 2 may be installed at all tires 6 included in the vehicle 5, or installed at at least one but not all of the tires 6.

The first acquisition device 2, the second acquisition device 3, and the control device 4 in the vehicle control system 1 will be described in detail below.

### (Structure of first acquisition device)

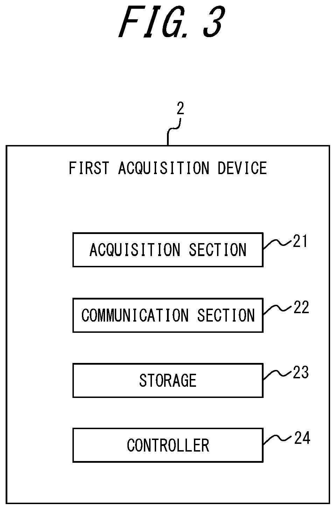

The structure of the first acquisition device 2 according to this embodiment will be described below with reference to FIG. 3. FIG. 3 is a functional block diagram schematically illustrating the structure of the first acquisition device 2. As illustrated in FIG. 3, the first acquisition device 2 includes an acquisition section 21, a communication section 22, a storage 23, and a controller 24. The acquisition section 21, the communication section 22, the storage 23, and the controller 24 are connected by wire or wirelessly so as to be communicable with each other.

The acquisition section 21 includes one or more sensors. The acquisition section 21 thus acquires information about the tire 6. For example, the acquisition section 21 includes a strain sensor. In such a case, the acquisition section 21 acquires the strain value of the tire 6 as the information about the tire 6. The sensor included in the acquisition section 21 is not limited to a strain sensor, and may be any sensor such as an accelerometer, an angular velocity sensor, or a pressure sensor. In such a case, the acquisition section 21 may acquire information such as the acceleration, angular velocity, vibration frequency, or pressure of the tire 6 as the information about the tire 6 in addition to or instead of the strain value of the tire 6. In the following description, the information about the tire 6 is also referred to as "first information". The information about the tire 6 may be an instantaneous value, which is a physical quantity at a certain point in time, or a continuous value or a discrete value, which is a series of physical quantities for a certain period. In the case where the information about the tire 6 is a continuous value or a discrete value, the information about the tire 6 may be waveform information indicating time-series changes in physical quantity.

The communication section 22 includes one or more wireless communication modules. Examples of the wireless communication modules include communication modules compliant with communication standards such as wireless local area network (LAN) and Bluetooth^{®} (Bluetooth is a registered trademark in Japan, other countries, or both). Thus, the first acquisition device 2 can wirelessly communicate with the control device 4 and the like via the communication section 22. The communication section 22 is not limited to a wireless communication module, and may include a wired communication module such as a wired LAN communication module.

The storage 23 is, for example, semiconductor memory, magnetic memory, or optical memory. The storage 23 may function, for example, as a main storage device, an auxiliary storage device, or cache memory. The storage 23 stores any information used for the operation of the first acquisition device 2. For example, the storage 23 may store system programs, application programs, embedded software, etc.

The controller 24 includes one or more processors. Examples of the processors include general-purpose processors such as a central processing unit (CPU) and dedicated processors specialized for specific processing. The controller 24 is not limited to processors, and may include one or more dedicated circuits. Examples of the dedicated circuits include a field-programmable gate array (FPGA) and an application specific integrated circuit (ASIC).

The controller 24 controls components such as the acquisition section 21, the communication section 22, and the storage 23 in order to achieve the foregoing functions of the first acquisition device 2. The controller 24 includes, as a function of the first acquisition device 2, a clocking function such as a real-time clock (RTC) or a timer in order to acquire the time at which the process is performed or to perform the process at predetermined time intervals.

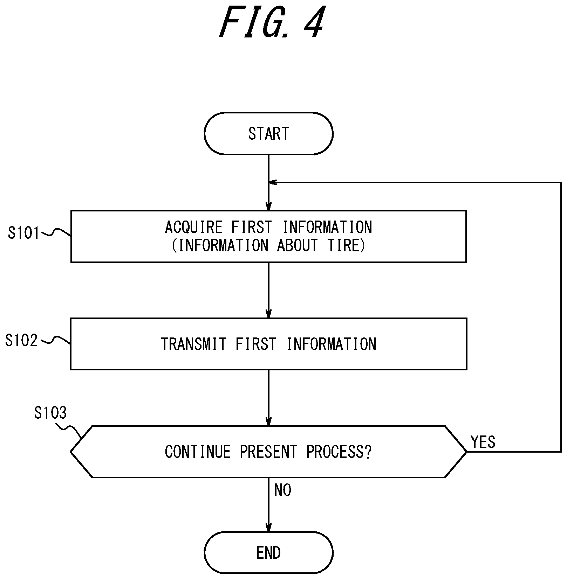

The operation of the first acquisition device 2 achieved by the controller 24 controlling each function of the first acquisition device 2 will be described below with reference to FIG. 4. FIG. 4 is a flowchart illustrating the operation of the first acquisition device 2. This operation corresponds to the control method of the first acquisition device 2. The controller 24 starts the present process, for example, when the first acquisition device 2 is powered on or when a control instruction to start the present process is received from the control device 4.

In step S 101, the controller 24 acquires information about the tire 6 (first information).

In this embodiment, the controller 24 acquires the strain value of the tire 6 as the information about the tire 6 by the strain sensor included in the acquisition section 21. The controller 24 may store the acquired strain value of the tire 6 and the acquisition time in the storage 23 as the information about the tire 6.

In step S102, the controller 24 transmits the acquired information about the tire 6 (first information).

Specifically, the controller 24 controls the communication section 22 to transmit the acquired information about the tire 6. The controller 24 may transmit a device identifier (ID) for uniquely identifying the first acquisition device 2, together with the information about the tire 6. In this embodiment, each time information about the tire 6 is acquired, the controller 24 transmits the information about the tire 6. Alternatively, the controller 24 may collectively transmit a plurality of sets of information about the tire 6 acquired during a predetermined period.

In step S103, the controller 24 determines whether to continue the present process.

For example, the controller 24 may determine to end the present process (i.e. not to continue the present process) in the case where a control instruction to end the present process is received from the control device 4. In the case where the controller 24 determines to continue the present process (step S103: Yes), the controller 24 repeats the present process from step S101 at predetermined time intervals. In the case where the controller 24 determines not to continue the present process (step S103: No), the controller 24 ends the present process.

### (Structure of second acquisition device)

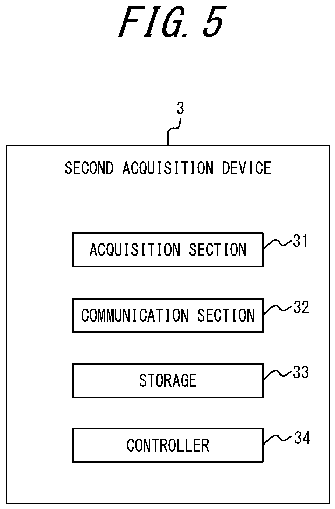

The structure of the second acquisition device 3 according to this embodiment will be described below with reference to FIG. 5. FIG. 5 is a functional block diagram schematically illustrating the structure of the second acquisition device 3. As illustrated in FIG. 5, the second acquisition device 3 includes an acquisition section 31, a communication section 32, a storage 33, and a controller 34. The acquisition section 31, the communication section 32, the storage 33, and the controller 34 are connected by wire or wirelessly so as to be communicable with each other.

The acquisition section 31 includes one or more sensors. The acquisition section 31 thus acquires information about the vehicle 5. For example, the acquisition section 31 includes an accelerometer. In such a case, the acquisition section 31 acquires the acceleration of the vehicle 5 as the information about the vehicle 5. The sensor included in the acquisition section 31 is not limited to an accelerometer, and may be any sensor such as an angular velocity sensor. In such a case, the acquisition section 31 may acquire information such as the angular velocity at the installation position of the second acquisition device 3 as the information about the vehicle 5 in addition to or instead of the acceleration of the vehicle 5. In the following description, the information about the vehicle 5 is also referred to as "second information". The information about the vehicle 5 may be an instantaneous value, which is a physical quantity at a certain point in time, or a continuous value or a discrete value, which is a series of physical quantities for a certain period. In the case where the information about the vehicle 5 is a continuous value or a discrete value, the information about the vehicle 5 may be waveform information indicating time-series changes in physical quantity.

The communication section 32 includes one or more wireless communication modules. Examples of the wireless communication modules include communication modules compliant with communication standards such as wireless LAN and Bluetooth. Thus, the second acquisition device 3 can wirelessly communicate with the control device 4 and the like via the communication section 32. The communication section 32 is not limited to a wireless communication module, and may include a wired communication module such as a wired LAN communication module.

The storage 33 is, for example, semiconductor memory, magnetic memory, or optical memory. The storage 33 may function, for example, as a main storage device, an auxiliary storage device, or cache memory. The storage 33 stores any information used for the operation of the second acquisition device 3. For example, the storage 33 may store system programs, application programs, embedded software, etc.

The controller 34 includes one or more processors. Examples of the processors include general-purpose processors such as a CPU and dedicated processors specialized for specific processing. The controller 34 is not limited to processors, and may include one or more dedicated circuits. Examples of the dedicated circuits include a FPGA and an ASIC.

The controller 34 controls components such as the acquisition section 31, the communication section 32, and the storage 33 in order to achieve the foregoing functions of the second acquisition device 3. The controller 34 includes, as a function of the second acquisition device 3, a clocking function such as a RTC or a timer in order to acquire the time at which the process is performed or to perform the process at predetermined time intervals.

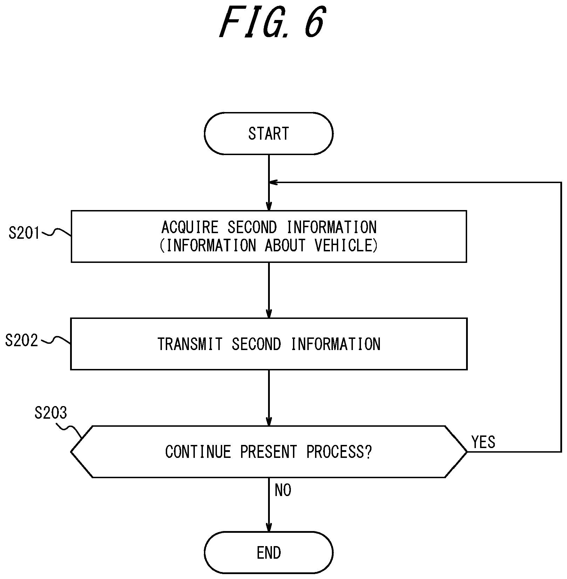

The operation of the second acquisition device 3 achieved by the controller 34 controlling each function of the second acquisition device 3 will be described below with reference to FIG. 6. FIG. 6 is a flowchart illustrating the operation of the second acquisition device 3. This operation corresponds to the control method of the second acquisition device 3. The controller 34 starts the present process, for example, when the second acquisition device 3 is powered on or when a control instruction to start the present process is received from the control device 4.

In step S201, the controller 34 acquires information about the vehicle 5 (second information).

In this embodiment, the controller 34 acquires the acceleration of the vehicle 5 as the information about the vehicle 5 by the accelerometer included in the acquisition section 31. The controller 34 may store the acquired acceleration of the vehicle 5 and the acquisition time in the storage 33 as the information about the vehicle 5.

In step S202, the controller 34 transmits the acquired information about the vehicle 5 (second information).

Specifically, the controller 34 controls the communication section 32 to transmit the acquired information about the vehicle 5. The controller 34 may transmit a device ID for uniquely identifying the second acquisition device 3, together with the information about the vehicle 5. In this embodiment, each time information about the vehicle 5 is acquired, the controller 34 transmits the information about the vehicle 5. Alternatively, the controller 34 may collectively transmit a plurality of sets of information about the vehicle 5 acquired during a predetermined period.

In step S203, the controller 34 determines whether to continue the present process.

For example, the controller 34 may determine to end the present process (i.e. not to continue the present process) in the case where a control instruction to end the present process is received from the control device 4. In the case where the controller 34 determines to continue the present process (step S203: Yes), the controller 34 repeats the present process from step S201 at predetermined time intervals. In the case where the controller 34 determines not to continue the present process (step S203: No), the controller 34 ends the present process.

### (Structure of control device)

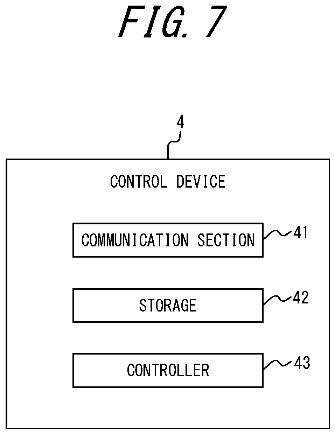

The structure of the control device 4 according to this embodiment will be described below with reference to FIG. 7. FIG. 7 is a functional block diagram schematically illustrating the structure of the control device 4. As illustrated in FIG. 7, the control device 4 includes a communication section 41, a storage 42, and a controller 43. The communication section 41, the storage 42, and the controller 43 are connected by wire or wirelessly so as to be communicable with each other.

The communication section 41 includes one or more wireless communication modules. Examples of the wireless communication modules include communication modules compliant with communication standards such as wireless LAN and Bluetooth. Thus, the control device 4 can wirelessly communicate with the first acquisition device 2, the second acquisition device 3, and the like via the communication section 41. The communication section 41 is not limited to a wireless communication module, and may include a wired communication module such as a wired LAN communication module.

The storage 42 is, for example, semiconductor memory, magnetic memory, or optical memory. The storage 42 may function, for example, as a main storage device, an auxiliary storage device, or cache memory. The storage 42 stores any information used for the operation of the control device 4. For example, the storage 42 may store system programs, application programs, embedded software, etc.

The controller 43 includes one or more processors. Examples of the processors include general-purpose processors such as a CPU and dedicated processors specialized for specific processing. The controller 43 is not limited to processors, and may include one or more dedicated circuits. Examples of the dedicated circuits include a FPGA and an ASIC.

The controller 43 controls components such as the communication section 41 and the storage 42 in order to achieve the foregoing functions of the control device 4. The controller 43 includes, as a function of the control device 4, a clocking function such as a RTC or a timer in order to acquire the time at which the process is performed or to perform the process at predetermined time intervals.

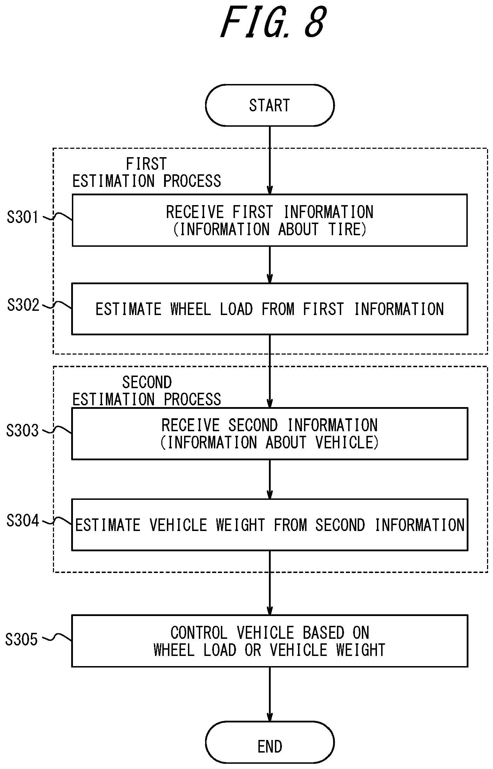

The operation of the control device 4 achieved by the controller 43 controlling each function of the control device 4 will be described below with reference to FIG. 8. FIG. 8 is a flowchart illustrating the operation of the control device 4. This operation corresponds to the control method of the control device 4.

In steps S301 and S302, the controller 43 performs a first estimation process of estimating the wheel load from information about the tire 6 (first information).

In step S301, the controller 43 receives information about the tire 6 (first information).

Specifically, the controller 43 receives information about the tires 6A to 6D respectively from the first acquisition devices 2A to 2D via the communication section 41. The controller 43 stores the strain values of the tires 6A to 6D and their acquisition times included in the information about the tires 6A to 6D, in the storage 42. The controller 43 may store the information about the tires 6A to 6D in the storage 42 as time-series data.

In step S302, the controller 43 estimates the wheel load from the information about the tire 6 (first information). Herein, the wheel load of the tire 6 is the weight applied from the tire 6 onto the road surface with which the tire 6 contacts. That is, the wheel load of the tire 6 is the weight supported by the tire 6 out of the gross (total) weight of the vehicle 5.

Specifically, the controller 43 may store an estimation algorithm that receives the strain value of the tire 6 included in the information about the tire 6 as input and outputs the wheel load of the tire 6, in the storage 42 in advance. The controller 43 then estimates the wheel loads of the tires 6A to 6D respectively from the strain values of the tires 6A to 6D, using the estimation algorithm. In the case where the information about the tire 6 (first information) includes information other than the strain value, an estimation algorithm capable of estimating the wheel load of the tire 6 may be used depending on the input information about the tire 6. For example, in the case where the information about the tire 6 includes the acceleration or vibration frequency at the installation position of the first acquisition device 2, an estimation algorithm for estimating the wheel load of the tire 6 from the acceleration or vibration frequency may be used.

In steps S303 and S304, the controller 43 performs a second estimation process of estimating the vehicle weight from information about the vehicle 5 (second information).

In step S303, the controller 43 receives information about the vehicle 5 (second information).

Specifically, the controller 43 receives information about the vehicle 5 from the second acquisition device 3 via the communication section 41. The controller 43 stores the acceleration of the vehicle 5 and the acquisition time included in the information about the vehicle 5, in the storage 42. The controller 43 may store the information about the vehicle 5 in the storage 42 as time-series data.

In step S304, the controller 43 estimates the vehicle weight from the information about the vehicle 5 (second information). Herein, the vehicle weight is the gross weight of the vehicle 5. The gross weight of the vehicle 5 includes not only the weights of the vehicle body 51, tires 6, and wheels 7 but also the weights of the occupants (passengers) and cargo mounted on the vehicle 5.

Specifically, the controller 43 estimates the vehicle weight from the information about the vehicle 5 (second information) using a vehicle model. The vehicle model is a physical model including functions, formulas, algorithms, etc. that represent the motion or state of the vehicle 5. The vehicle model may be composed of the equation of motion, equation of state, etc. of the vehicle 5. Alternatively, the vehicle model may be an observer model, a statistical model, a neural network, or the like.

The controller 43 may perform learning of the vehicle model. Specifically, the controller 43 performs machine learning, deep learning, parameter identification, or the like based on time-series data such as information representing the motion or state of the vehicle 5 or control information of the vehicle 5, to set or tune the parameters used in the vehicle model and construct or update the vehicle model.

In this embodiment, the vehicle model is, for example, an observer model. As an example, the vehicle model may be an observer model representing the relationship between the acceleration of the vehicle 5 and the output (power) of the engine. In such a case, the controller 43 uses the vehicle model to estimate the vehicle weight of the vehicle 5 from the relationship between the acceleration of the vehicle 5 included in the information about the vehicle 5 and the current output of the engine. As another example, the vehicle model may be an observer model representing the relationship between the acceleration of the vehicle 5 and the degree of rotation of the steering shaft. In such a case, the controller 43 uses the vehicle model to estimate the vehicle weight of the vehicle 5 from the relationship between the acceleration of the vehicle 5 included in the information about the vehicle 5 and the current degree of rotation of the steering shaft.

The controller 43 may use the wheel load estimated in the first estimation process, for learning the vehicle model. Specifically, in the case where the vehicle model is an observer model, the vehicle weight calculated from the wheel load estimated in the first estimation process may be used as an initial value of the vehicle weight of the vehicle 5 estimated by the vehicle model. This can facilitate the convergence of the observer model and shorten the time required from the start of the learning of the vehicle model to the stabilization of the output of the vehicle model. In the case where the information about the vehicle 5 (second information) includes information other than the acceleration, a vehicle model capable of estimating the vehicle weight of the vehicle 5 may be used depending on the input information about the vehicle 5.

In step S305, the controller 43 controls the vehicle 5 based on one of the wheel load and the vehicle weight.

Specifically, to select the information to be used for controlling the vehicle 5, the controller 43 may determine whether the difference between a predetermined weight A calculated using the wheel load and a predetermined weight B calculated using the vehicle weight is within a predetermined difference range. For example, each of the predetermined weight A and the predetermined weight B is the vehicle weight of vehicle 5. In such a case, the controller 43 sets the sum of the wheel loads of the tires 6A to 6D estimated in the first estimation process, as the predetermined weight A. The controller 43 also sets the vehicle weight of the vehicle 5 estimated in the second estimation process, as the predetermined weight B. The controller 43 determines whether the difference between the predetermined weight A and the predetermined weight B is within the predetermined difference range. Whether the difference between the predetermined weight A and the predetermined weight B is within the predetermined difference range may be determined, for example, based on whether one of the predetermined weight A and the predetermined weight B is within the range of ±10 % of the other one of the predetermined weight A and the predetermined weight B. The method of determining whether the difference between the predetermined weight A and the predetermined weight B is within the predetermined difference range is not limited to such. Moreover, the predetermined weight A and the predetermined weight B are not limited to vehicle weight, and may be any weight related to the vehicle 5 such as axle load or wheel load.

In the case where the controller 43 determines that the difference between the predetermined weight A and the predetermined weight B is within the predetermined difference range, the controller 43 controls the vehicle 5 based on the wheel load estimated in the first estimation process. Specifically, the controller 43 may perform automated driving of the vehicle 5 using the wheel loads of the tires 6A to 6D. In the case where the difference between the predetermined weight A and the predetermined weight B is within the predetermined difference range, the controller 43 can determine that the estimated wheel load and vehicle weight are substantially equal in accuracy. In such a case, the controller 43 uses the wheel load, which is more detailed information, to control the vehicle 5.

In the case where the controller 43 determines that the difference between the predetermined weight A and the predetermined weight B is not within the predetermined difference range, the controller 43 controls the vehicle 5 based on the vehicle weight estimated in the second estimation process. Specifically, the controller 43 may perform automated driving of the vehicle 5 using the vehicle weight of the vehicle 5. In the case where the difference between the predetermined weight A and the predetermined weight B is not within the predetermined difference range, the controller 43 can determine that the estimated wheel load and vehicle weight differ in accuracy. In such a case, the controller 43 uses the vehicle weight, which is more reliable information, to control the vehicle 5. This is based on the premise that, since the first acquisition device 2 installed at the tire 6 is easily affected by the roughness of the road surface or the first acquisition device 2 which is farther from the control device 4 than the second acquisition device 3 is more prone to unstable communication with the control device 4, the first information is more susceptible to accuracy degradation or data loss than the second information and consequently the reliability of the wheel load decreases as compared with that of the vehicle weight. Thus, the controller 43 can select one of the estimated wheel load and vehicle weight that is more suitable for controlling the vehicle 5, and use the selected information to control the vehicle 5.

When controlling the vehicle 5 based on one of the wheel load and the vehicle weight as described above, the controller 43 may perform limited vehicle control in the case where the reliability of the control of the vehicle 5 is assumed to be insufficient. The limited vehicle control is, for example, automated driving with a speed limit. In such a case, the controller 43 may accelerate, decelerate, or steer the vehicle 5 so as not to exceed a predetermined speed. Alternatively, the limited vehicle control may be automated driving with a limit on lane changing, passing, or the like. The limited vehicle control may be to lower the level of automated driving in SEA.

For example, the controller 43 may perform limited vehicle control for a predetermined period after the start of the learning of the vehicle model. The vehicle weight of the vehicle 5 is expected to change when passengers get in or out of the vehicle or cargo is loaded or unloaded while the vehicle 5 is stopped. Accordingly, the controller 43 may perform the learning of the vehicle model at the timing when the parking brake is released in order to cause the stopped vehicle 5 to start traveling again. Here, a predetermined period may be required from the start of the learning of the vehicle model to the stabilization of the output of the vehicle model, as mentioned above. The controller 43 therefore performs limited vehicle control for the predetermined period after the start of the learning of the vehicle model, thus improving the safety of the control of the vehicle 5 in the period during which the accuracy of the vehicle weight estimated using the vehicle model is insufficient. For example, the predetermined period may be 1 minute or more and 5 minutes or less.

All or part of the functions or processes described as the functions of the control device 4 in the foregoing embodiment may be implemented by a program. The program can be recorded in a computer-readable non-transitory recording medium. Examples of the computer-readable non-transitory recording medium include a magnetic recording device, an optical disc, a magneto-optical recording medium, and semiconductor memory. The program is distributed, for example, by selling, transferring, or renting a portable recording medium having the program recorded therein, such as a digital versatile disc (DVD) or a compact disc read only memory (CD-ROM). Alternatively, the program may be stored in a storage of a certain server and transferred from the certain server to another computer to distribute the program. The program may be provided as a program product.

For example, the processor in the computer once stores, in memory, the program recorded in the portable recording medium or the program transferred from the certain server, and then reads the program stored in the memory and executes processes according to the read program. The program includes information that is to be processed by a processor and is equivalent to a program. For example, data that is not a direct command to the processor but has the property of defining the processes of the processor is "equivalent to a program".

As described above, the control device 4 according to an embodiment of the present disclosure is the control device 4 for the vehicle 5, and comprises the communication section 41 and the controller 43. The communication section 41 is configured to receive first information (information about the tire 6 acquired by the first acquisition device 2) from a sensor installed at the tire 6, and receive second information (information about the vehicle 5 acquired by the second acquisition device 3) from a sensor installed at the vehicle body 51. The controller 43 is configured to estimate a wheel load from the first information, estimate a vehicle weight from the second information, and control the vehicle 5 based on one of the wheel load and the vehicle weight. With this structure, even in the case where the vehicle 5 cannot be controlled based on the information from the sensor installed at the tire 6, the control device 4 can control the vehicle 5 based on the information from the sensor installed at the vehicle body 51. Thus, the control device 4 can improve the usefulness of the technology of controlling the vehicle 5 using the information from the sensor installed at the tire 6.

Preferably, in the control device 4 according to an embodiment of the present disclosure, the controller 43 is configured to: determine whether the difference between the predetermined weight A calculated using the wheel load and the predetermined weight B calculated using the vehicle weight is within a predetermined difference range; control the vehicle 5 based on the wheel load in the case where the controller 43 determines that the difference is within the predetermined difference range; and control the vehicle 5 based on the vehicle weight in the case where the controller 43 determines that the difference is not within the predetermined difference range. With this structure, the controller 43 can use the wheel load, which is more detailed information than the vehicle weight, to control the vehicle 5 in the case where the estimated wheel load and vehicle weight are substantially equal in accuracy, and use the vehicle weight, which is more reliable information than the wheel load, to control the vehicle 5 in the case where the estimated wheel load and vehicle weight differ in accuracy. Thus, the control device 4 can select one of the estimated wheel load and vehicle weight that is more suitable for controlling the vehicle 5 and use the selected information to control the vehicle 5.

Preferably, in the control device 4 according to an embodiment of the present disclosure, the controller 43 is configured to estimate the vehicle weight from the second information using a vehicle model, and perform learning of the vehicle model. With this structure, the control device 4 can improve the accuracy of the vehicle weight estimated from the second information.

Preferably, in the control device 4 according to an embodiment of the present disclosure, the vehicle model is an observer model, and the controller 43 is configured to perform the learning of the vehicle model using the wheel load. With this structure, the control device 4 can facilitate the convergence of the observer model and shorten the time required from the start of the learning of the vehicle model to the stabilization of the output of the vehicle model.

Preferably, in the control device 4 according to an embodiment of the present disclosure, the controller 43 is configured to perform limited vehicle control for a predetermined period after the learning of the vehicle model starts. With this structure, the control device 4 can improve the safety of the control of the vehicle 5 in the period during which the accuracy of the vehicle weight estimated using the vehicle model is insufficient.

Preferably, in the control device 4 according to an embodiment of the present disclosure, the limited vehicle control is automated driving with a speed limit. With this structure, the control device 4 can improve the safety of automated driving of the vehicle 5.

A control method according to an embodiment of the present disclosure is a control method for the vehicle 5. The control method comprises: receiving first information (information about the tire 6 acquired by the first acquisition device 2) from a sensor installed at the tire 6; receiving second information (information about the vehicle 5 acquired by the second acquisition device 3) from a sensor installed at the vehicle body 51; estimating a wheel load from the first information; estimating a vehicle weight from the second information; and controlling the vehicle 5 based on one of the wheel load and the vehicle weight. With this control method, even in the case where the vehicle 5 cannot be controlled based on the information from the sensor installed at the tire 6, the vehicle 5 can be controlled based on the information from the sensor installed at the vehicle body 51. Thus, the control method can improve the usefulness of the technology of controlling the vehicle 5 using the information from the sensor installed at the tire 6.

While the presently disclosed techniques have been described above by way of embodiments and drawings, various changes and modifications can be made by those of ordinary skill in the art based on the present disclosure. Such changes and modifications are therefore included in the scope of the present disclosure. For example, the structures, functions, etc. included in each embodiment or example may be rearranged without logical inconsistency. The structures, functions, etc. included in each embodiment may be used in combination with another embodiment or example, and a plurality of structures, functions, etc. may be combined into one structure, function, etc., one structure, function, etc. may be divided into a plurality of structures, functions, etc., or part of the structures, functions, etc. may be omitted.

For example, all or part of the functions or processes described as the functions or processes of the control device 4 in the foregoing embodiment may be implemented as the functions or processes of the first acquisition device 2 or the second acquisition device 3. In such a case, a program describing the functions or processes of the control device 4 according to the embodiment may be stored in, for example, memory in the first acquisition device 2 or the second acquisition device 3, and read and executed by, for example, the processor in the first acquisition device 2 or the second acquisition device 3.

All or part of the functions or processes described as the functions or processes of the control device 4 in the foregoing embodiment may be implemented as the functions or processes of a server installed outside the vehicle 5. In such a case, the server may provide all or part of the functions or processes of the control device 4 as a service such as SaaS (Software as a Service). For example, a server installed outside the vehicle 5 may, as the control device 4, perform all or part of the processes described above and transmit the processing result to an ECU of the vehicle 5 to indirectly control the vehicle 5.

Although the foregoing embodiment describes the case where the vehicle model for estimating the vehicle weight from the information about the vehicle 5 (second information) is learned, the present disclosure is not limited to such, and an estimation algorithm for estimating the wheel load from the information about the tire 6 (first information) may be learned. In such a case, machine learning, deep learning, parameter identification, or the like may be performed based on time-series data such as information about the tire 6 to set or tune the parameters used in the estimation algorithm and construct or update the estimation algorithm.

### REFERENCE SIGNS LIST

- 1: vehicle control system
- 2 (2A, 2B, 2C, 2D): first acquisition device
- 21: acquisition section
- 22: communication section
- 23: storage
- 24: controller
- 3: second acquisition device
- 31: acquisition section
- 32: communication section
- 33: storage
- 34: controller
- 4: control device
- 41: communication section
- 42: storage
- 43: controller
- 5: vehicle
- 51: vehicle body
- 52 (52A, 52B): axle
- 6 (6A, 6B, 6C, 6D): tire
- 6A: tread portion
- 7: wheel
- 7A: rim

## Claims

1. A control device for a vehicle, the control device comprising:
a communication section configured to receive first information from a sensor installed at a tire, and receive second information from a sensor installed at a vehicle body; and
a controller configured to estimate a wheel load from the first information, estimate a vehicle weight from the second information, and control the vehicle based on one of the wheel load and the vehicle weight.

2. The control device according to claim 1, wherein the controller is configured to: determine whether a difference between a predetermined weight calculated using the wheel load and a predetermined weight calculated using the vehicle weight is within a predetermined difference range; control the vehicle based on the wheel load in a case where the controller determines that the difference is within the predetermined difference range; and control the vehicle based on the vehicle weight in a case where the controller determines that the difference is not within the predetermined difference range.

3. The control device according to claim 1 or 2, wherein the controller is configured to estimate the vehicle weight from the second information using a vehicle model, and perform learning of the vehicle model.

4. The control device according to claim 3, wherein the vehicle model is an observer model, and
the controller is configured to perform the learning of the vehicle model using the wheel load.

5. The control device according to claim 3 or 4, wherein the controller is configured to perform limited vehicle control for a predetermined period after the learning of the vehicle model starts.

6. The control device according to claim 5, wherein the limited vehicle control is automated driving with a speed limit.

7. A control method for a vehicle, the control method comprising:
receiving first information from a sensor installed at a tire;
receiving second information from a sensor installed at a vehicle body;
estimating a wheel load from the first information;
estimating a vehicle weight from the second information; and
controlling the vehicle based on one of the wheel load and the vehicle weight.
